# EUROPÄISCHE PATENTANMELDUNG

(11) **EP 2 995 482 A2**
(43) Veröffentlichungstag der Anmeldung: **16.03.2016**
(21) Anmeldenummer: 15001678.0
(22) Anmeldetag: 05.06.2015
(51) Int. Cl.: B60G 7/00, B60G 9/00

(54) **LENKER ZUR ANBINDUNG EINER FAHRZEUGACHSE AN EINEM FAHRZEUGRAHMEN EINES FAHRZEUGS**

(30) Priorität: 10.09.2014 DE 102014013499
(71) Anmelder: MAN Truck & Bus AG, 80995 München (DE)
(72) Erfinder: Hintereder, Jürgen, 85586 Poing (DE)

(57) **Zusammenfassung**

Die Erfindung betrifft einen Lenker zur Anbindung einer Fahrzeugachse, insbesondere einer Starrachse, an einen Fahrzeugrahmen eines Fahrzeugs. Der Lenker dient zur Längsführung, Querführung und Rollstabilisierung und umfasst ein erstes Bauteil (11) und ein mit dem ersten Bauteil lösbar oder nicht lösbar verbundenes zweites Bauteil (12). Hierbei sind die Längs- und Querführungseigenschaften des Lenkers (10) im Wesentlichen durch das erste Bauteil (11) und die Rollstabilisierungseigenschaft des Lenkers (10) im Wesentlichen durch das zweite Bauteil (12) festgelegt.

## Beschreibung

Die Erfindung betrifft einen Lenker zur Anbindung einer Fahrzeugachse, insbesondere einer Starrachse, an einem Fahrzeugrahmen. Die Erfindung betrifft insbesondere einen derartigen Lenker zur Längsführung, Querführung und Rollstabilisierung. Die Erfindung betrifft ferner ein Verfahren zur Herstellung des Lenkers.

Zur Anlenkung einer starren Antriebsachse eines Nutzfahrzeugs werden vielfach Achsaufhängungen eingesetzt, die aus einer Achsführung durch an beiden Fahrzeugseiten angeordnete Längslenker, die einerseits an der Fahrzeugachse und andererseits am Fahrzeugaufbau angelenkt sind, und einem in der Fahrzeugmitte mit einem Zentralgelenk an der Fahrzeugachse verankerten und mit den Enden seiner beiden Armen andererseits am Fahrzeugaufbau angelenkten Dreieckslenker gebildet werden. Zur Stabilisierung ist ferner ein im Allgemeinen U-förmiger Stabilisatorstab vorgesehen.

Nachteilig an diesen bekannten Achsaufhängungen sind der Bauraumbedarf für die Anordnung des Stabilisatorstabes, das hohe Gewicht und die kostenaufwändige Gestaltung der Achsaufhängung.

Eine vereinfachte Achsaufhängung für Starrachsen ist aus der DE 195 21 874 A1 bekannt. Die vorgeschlagene Achsaufhängung weist einen Vierpunktlenker, auch als X-Lenker bezeichnet, auf, bestehend aus zwei stabilen Gelenkarmen, die durch ein Flächentragwerk fest miteinander verbunden sind, wobei Letzteres verwindbar mit definierter Kennlinie der Verwindung ausgeführt ist.

Der Vierpunktlenker übernimmt die Achsführung in Längs- und Querrichtung und gleichzeitig die Rollstabilisierung (Wankstabilisierung) der Achse. Vierpunktlenker sind aus dem Stand der Technik in unterschiedlichen Ausführungen bekannt und ermöglichen eine Bauteil- und Materialkostenreduktion sowie eine Reduktion des benötigten Bauraums, da kein gesonderter Bauraum für die Lagerung eines Stabilisatorstabs mehr erforderlich ist.

Als nachteilig hat sich jedoch die betriebsfeste Auslegung des Vierpunktlenkers erwiesen. Durch die verschiedenen Lastszenarien und die definierte Steifigkeitsanforderung (Stabilisierungsrate) muss beim Vierpunktlenker ein Kompromiss für die Geometrie gefunden werden. Dadurch ergeben sich gegenüber Längslenker und Dreieckslenker höhere Beanspruchungen, die über eine entsprechende Materialauswahl und Fertigungstechnologie abgedeckt werden müssen. Der erhöhte Fertigungsaufwand führt zu höheren Kosten, die einen großen Teil des ursprünglichen Einsparpotentials beanspruchen. Beim klassischen Fahrwerk ist der Stabilisator im Zeitfestigkeitsbereich ausgelegt. Bei Fahrzeugen mit hohem Schwerpunkt oder hohem Kurvenfahrtanteil wird nur eine begrenzte Lebensdauer erreicht. Der Ausfall ist jedoch nicht sicherheitsrelevant. Beim Vierpunktlenker ist es üblich, ein solches Versagen zu Lasten der Materialausnutzung auf die achsseitigen Arme des Lenkers zu legen (Bruch einer dieser Arme). Darüber hinaus ist der Vierpunktlenker üblicherweise für schweren Einsatz, z. B. auf der Baustelle, nicht freigegeben. Beim Vierpunktlenker existieren derzeit keine Varianten bezüglich der Stabilisierung, wie etwa beim Standardfahrwerk, da dies einen erheblichen Aufwand bedeutet würde. Für jede gewünschte Rollstabilisierungsrate wäre dabei ein eigener Lenker zu entwickeln.

Es ist somit eine Aufgabe der Erfindung, einen verbesserten Lenker bereitzustellen, mit dem Nachteile herkömmlicher Vierpunktlenker vermieden werden können. Der Erfindung liegt insbesondere die Aufgabe zugrunde, einen Lenker eines Kraftfahrzeugs zur Längsführung, Querführung und Rollstabilisierung bereitzustellen, der wenig Bauraum beansprucht und dessen Eigenschaften der Längsführung, der Querführung und insbesondere der Rollstabilisierung sich zielgenauer festlegen und optimieren lassen.

Diese Aufgaben werden durch einen Lenker mit den Merkmalen des Hauptanspruchs gelöst. Vorteilhafte Ausführungsformen und Anwendungen der Erfindung sind Gegenstand der abhängigen Ansprüche und des nebengeordneten Anspruchs und werden in der folgenden Beschreibung unter teilweiser Bezugnahme auf die Figuren näher erläutert.

Die Erfindung betrifft einen Lenker zur Anbindung einer Fahrzeugachse an einem Fahrzeugrahmen. Der Lenker dient insbesondere zur Anlenkung einer starren Antriebsachse eines Nutzfahrzeugs. Der Lenker ermöglicht ferner die Längsführung, Querführung und Rollstabilisierung (Wankstabilisierung) des Fahrzeugs.

Gemäß allgemeinen Gesichtspunkten der Erfindung umfasst der Lenker ein erstes Bauteil und ein mit dem ersten Bauteil lösbar oder nicht lösbar verbundenes zweites Bauteil, wobei die Längs- und Querführungseigenschaft des Lenkers im Wesentlichen durch das erste Bauteil und die Rollstabilisierungseigenschaft des Lenkers im Wesentlichen durch das zweite Bauteil festgelegt ist.

Der erfindungsgemäße Lenker umfasst somit einen Bauteilverbund, gebildet aus dem ersten und dem zweiten Bauteil, wobei die Längs- und Querführungseigenschaften maßgeblich durch das erste Bauteil und die Rollstabilisierungseigenschaften maßgeblich durch das zweite Bauteil bestimmt werden.

Ein besonderer Vorzug der Erfindung liegt somit darin, dass das erste Bauteil und das zweite Bauteil jeweils zielgenau auf ihre Funktion hin optimiert und optimal ausgelegt werden können. Hierbei können numerische Verfahren, unter anderem Topologieoptimierungen mittels der Finite-Elemente-Methode (FEM), eingesetzt werden.

Das erste Bauteil kann hierbei einteilig oder mehrteilig ausgeführt sein. Gleiches gilt für das zweite Bauteil. Das zweite Bauteil ist ferner verwindbar. Dadurch können die Längs- und Querführungseigenschaften einerseits und die Rollstabilisierungseigenschaften andererseits unabhängig voneinander durch entsprechendes Auslegen der diesen Eigenschaften zugeordneten Bauteile variiert und festgelegt werden. Durch eine Auswahl von Komponenten können so auch verschiedene Lenker aufgebaut werden, die sich bezüglich ihrer Eigenschaften unterscheiden, vornehmlich der Wankstabilisierungsrate.

Dadurch ist es beispielsweise möglich, durch Veränderung der Eigenschaft des zweiten Bauteils die Stabilisierungseigenschaft des Lenkers zur verändern, ohne dass gleichzeitig die Längs- und Querführungseigenschaften des Lenkers betroffen sind und/oder verändert werden. Beispielsweise besteht im Rahmen der Erfindung die Möglichkeit, durch Variation der Wandstärke, des Materials und/oder der Geometrie des zweiten Bauteils dessen Stabilisierungseigenschaften und damit die Stabilisierungseigenschaften des gesamten Lenkers zu verändern. Somit kann gezielt die Stabilisierungseigenschaft des Lenkers auf einfache Weise geändert bzw. eingestellt werden. Ferner kann durch Kombination jeweils eines zweiten Bauteils, das aus einer Gruppe von zweiten Bauteilen mit unterschiedlichen Rollstabilisierungseigenschaften ausgewählt wird, mit einem ersten Bauteil eine Vielzahl von Lenkern modular hergestellt werden, die die gleichen Längs- und Querführungseigenschaften, aber unterschiedliche Rollstabilisierungseigenschaften aufweisen. Falls das zweite Bauteile lösbar mit dem ersten Bauteil verbunden ist, ist ein weiterer Vorteil, dass beispielsweise eine Stabilisierungseigenschaft eines Lenkers nachträglich verändert werden kann, indem ein bestehendes zweites Bauteil durch ein neues zweites Bauteil mit geänderten Rollstabilisierungseigenschaften ausgetauscht wird.

Der erfindungsgemäße Grundaufbau des Lenkers ermöglicht somit, die Längs- und Querführungseigenschaft einerseits und die Rollstabilisierungseigenschaft des Lenkers andererseits getrennt voneinander zu optimieren und festzulegen. Im Bauteilverbund ergibt sich dann ein Kombilenker mit der gewünschten Längsführung, Querführung und Rollstabilisierung.

Der Zusammenbau der einzelnen Komponenten zum Bauteilverbund bzw. Kombilenker kann mit lösbaren Verbindungstechniken wie Schrauben, Nieten, Bördeln, Durchsetzfügen etc. sowie nicht lösbaren Verbindungstechniken wie Schweißen, Kleben, Klemmen, Schrumpfen etc. erfolgen.

Gemäß einer besonders bevorzugten Ausgestaltungsform ist das erste Bauteil ein Dreieckslenker, der in an sich bekannter Weise eine Längsführungs- und eine Querführungseigenschaft kombiniert. Der Dreieckslenker kann als Hohlbauteil oder Massivbauteil ausgeführt sein.

Im Rahmen der vorliegenden Beschreibung werden die Begriffe achsseitig und rahmenseitig im Zusammenhang mit Seiten des Lenkers oder der Lenkerbauteile verwendet. Der Begriff "achsseitig" ist dabei so zu verstehen, dass damit diejenige Seite des Lenkers oder des Bauteils bezeichnet wird, die der Achse im eingebauten Zustand des Lenkers zugewandt ist. Der Begriff "rahmenseitig" ist in analoger Weise so zu verstehen, dass damit diejenige Seite des Lenkers oder des Bauteils bezeichnet wird, die der Anbindungsstelle am Rahmen bzw. am Fahrzeugaufbau im eingebauten Zustand des Lenkers zugewandt ist.

Ferner kann das erste Bauteil zwei Lageraufnahmen (nachfolgend auch als Lageraugen bezeichnet) zur rahmenseitigen Anbindung des Lenkers und eine Lageraufnahme zur achsseitigen Anbindung des Lenkers aufweisen. Ferner kann das erste Bauteil mittels beweglicher Lager, die Verdrehfreiheitsgrade aufweisen und die Zug- und Druckkräfte auf den Lenker übertragen, am Fahrzeugrahmen und der Fahrzeugachse anbindbar sein. Hierzu kann das erste Bauteil zur achsseitigen und/oder rahmenseitigen Anbindung sphärische und/oder kardanische Lager aufweisen.

Im Unterschied zum ersten Bauteil kann das zweite Bauteil mindestens eine Stelle zur starren, drehfesten achsseitigen Anbindung aufweisen, so dass die auf das zweite Bauteil wirkenden Torsionsmomente direkt übertragen werden und das zweite Bauteil somit eine Stabilisierungsfunktion ausüben kann. Beispielsweise kann das zweite Bauteil an der mindestens einen Stelle drehfest mit der Achse oder einem an der Achse befestigten Stützkörper verschraubt sein.

Ferner kann das zweite Bauteil auf einem Abschnitt des ersten Bauteils im Bereich der rahmenseitigen Anbindung des ersten Bauteils formschlüssig und/oder nicht fest verbunden aufliegen und selbst nicht unmittelbar am Rahmen befestigt sein. Das zweite Bauteil kann beispielsweise auf das erste Bauteil aufgesteckt oder aufgeschoben sein und/oder auf diesem gewichtsmäßig aufliegen. Das zweite Bauteil kann sich somit mit dem ersten Bauteil abstützen und dadurch seine Stabilisierungsfunktion ausüben. Gemäß diesen Varianten ist das zweite Bauteil somit lösbar am ersten Bauteil befestigt, was eine schnellere Montage ermöglicht. Fernern kann das zweite Bauteil ggf. wieder ausgetauscht werden.

Eine vorteilhafte Möglichkeit der erfindungsgemäßen Realisierung sieht vor, dass das zweite Bauteil eine das erste Bauteil umgreifende Hohlstruktur aufweist. Durch Variation der Wandstärke, des Materials oder der Geometrie der Hohlstruktur kann beispielsweise die Stabilisierungseigenschaft variiert und festgelegt werden.

Eine weitere Variante der erfindungsgemäßen Realisierung sieht vor, dass in das zweite Bauteil an einer vorbestimmten Stelle unterschiedliche Stabilisierungseinsätze befestigbar sind, mittels derer die Stabilisierungseigenschaften des zweiten Bauteils in vorbestimmter Weise gezielt verändert werden können. Beispielsweise kann das zweite Bauteil so ausgeführt sein, dass unterschiedliche Blechpressteile, z. B. U-förmige Blechpresswinkel, eingelegt werden können.

Dies bietet den Vorteil, dass mit nur einem Grundkörper für das zweite Bauteil, aber einer Mehrzahl verschiedener Einsätze, die am zweiten Bauteil befestigbar sind, unterschiedliche vorbestimmte Stabilisierungsraten erzielbar sind.

Das zweite Bauteil kann genau eine Stelle zur starren, drehfesten achsseitigen Anbindung aufweisen, so dass der Kombilenker bzw. Bauteilverbund, gebildet aus dem ersten Bauteil und dem zweiten Bauteil, einen Vierpunktlenker mit zwei rahmenseitigen und zwei achsseitigen Anbindungsstellen ausbildet. Dies bietet den Vorteil, dass der erfindungsgemäße Bauteilverbund an den gleichen Anlenkstellen wie ein herkömmlicher Vierpunktlenker am Rahmen und der Achse anbringbar ist - mit dem Unterschied, dass eine der vier Anbindungsstellen, insbesondere eine achsseitige Anbindungsstelle, eine drehfeste Anbindungsstelle ist. Im Rahmen der Erfindung besteht jedoch auch die Möglichkeit, dass das zweite Bauteil zwei Stellen zur starren, drehfesten achsseitigen Anbindung aufweist. Vorzugsweise ist hierbei die achsseitige gelenkige Anbindung des ersten Bauteils mittig zwischen den beiden achsseitigen Anbindungsstellen des zweiten Bauteils angeordnet. Gemäß dieser Variante kann das zweite Bauteil symmetrisch in Bezug auf die Kraftverteilung ausgelegt werden, da zwei Stellen statt einer Stelle zur Krafteinleitung eine vorteilhaftere Kraftverteilung ermöglichen und zu einer reduzierten Materialbeanspruchung führt.

Die Erfindung ist hinsichtlich des konstruktiven Aufbaus des ersten Bauteils und des zweiten Bauteils nicht auf einen bestimmten Aufbau beschränkt. Nachfolgend werden jedoch vorteilhafte konstruktive Ausführungsvarianten beispielhaft beschrieben.

Vorstehend wurde bereits erwähnt, dass das zweite Bauteil eine das erste Bauteil umgreifende Hohlstruktur aufweisen kann. Hierbei kann das zweite Bauteil eine das erste Bauteil umgreifende Schalenstruktur aufweisen. Die Schalenstruktur kann beispielsweise aus geschweißten oder hohlgegossenen Blechschalen, einem Flächenbauteil oder einem karbonfaserverstärkten Stoff gebildet sein. Ferner können die Oberseite und Unterseite der umgreifenden Schalenstruktur leicht bombiert sein. Die Schalenstruktur kann aus zwei Halbschalen, z. B. gepressten Blechschalen, gefertigt sein, die in einer mittleren Symmetrieebene zusammengefügt sind.

Die Schalenstruktur kann formangepasste Öffnungen zur Durchführung der Lenkerarme des ersten Bauteils bzw. der Endabschnitte der Lenkerarme aufweisen.

Ferner können an den Lenkerarmen des Dreieckslenkers jeweils endseitig angeformte Stege vorgesehen sein. Die Stege befinden sich somit kurz vor den Lageraufnahmen des Dreieckslenkers. Vorzugsweise sind an jedem der drei Endbereiche der Lenkerarme jeweils zwei Stege auf gegenüberliegenden lateralen Seiten der Lenkerarme angeordnet und erstrecken sich in Längsrichtung der Lenkerarme. Gemäß dieser Variante kann das zweite Bauteil im Bereich der formangepassten Öffnungen zur Durchführung der Lenkerarme drei an die Stege formangepasste Nuten zur Aufnahme der Stege aufweisen, so dass das zweite Bauteil auf das erste Bauteil aufgeschoben werden kann, bis die Stege in Eingriff mit den Nuten sind, wodurch das zweite Bauteil auf den Stegen abgestützt wird. Diese Variante ermöglicht eine sichere lösbare Steckverbindung zwischen dem ersten Bauteil und dem zweiten Bauteil und ein gutes Abstützen des zweiten Bauteils auf dem ersten Bauteil bei Einleiten eines Torsionsmoments.

Gemäß einer weiteren Ausführungsvariante einer umgreifenden Hohlstruktur können eine Oberseite und eine Unterseite des zweiten Bauteils plan und plattenförmig ausgeführt sein, wobei das zweite Bauteil zumindest zu zwei benachbarten Seiten hin offen ist, um das zweite Bauteil auf das erste Bauteil aufstecken zu können. Gemäß dieser Variante kann das auf das erste Bauteil aufgeschobene oder aufgesteckte zweite Bauteil an den Lenkerarmen des ersten Bauteils gewichtsmäßig aufliegen und sich dort abstützen. Bei dieser Variante stützt sich das rollstabilisierende zweite Bauteil somit gegenüber dem ersten Bauteil auf dessen Lenkerarmen (Lenkerhals) ab. Eine Veränderung der Deformation des zweiten Bauteils erzeugt somit eine Reibungskraft durch die Abstützung auf dem ersten Bauteil, wodurch das zweite Bauteil seine Stabilisierungsfunktion ausübt. Diese Ausführungsvariante bietet den Vorteil, dass das zweite Bauteil mit einfachen Fügetechnologien herstellbar ist und einen geringen Fertigungsaufwand erfordert.

Zur besseren Spannungsverteilung kann das zweite Bauteil in Form einer umgreifenden Hohlstruktur gemäß der vorstehenden Variante auf der Oberseite und/oder Unterseite eine Ausnehmung aufweisen, die vorzugsweise kreisförmig ausgeführt ist. Diese Variante ist besonders vorteilhaft bei der vorgenannten Schalenstruktur des zweiten Bauteils. Eine derartige Öffnung bzw. Ausnehmung bewirkt eine Entlastung bei Deformationen im Bereich des achsseitigen Lagers, da durch die Öffnung das Bauteil weicher ausgestaltet wird.

Zur besseren Spannungsverteilung besteht ferner die Möglichkeit, dass ein Seitenbereich des zweiten Bauteils eine Ausnehmung aufweist, die an oder angrenzend zu einer Stelle, an der das zweite Bauteil einen Lenkerhals bzw. Lenkerarm des ersten Bauteils umgreift, vorgesehen ist. Eine derartige Ausnehmung oder Öffnung bewirkt wiederum eine bessere Spannungsverteilung. Diese Variante ist besonders vorteilhaft in Verbindung mit der vorgenannten Variante, bei der die Oberseite und Unterseite des zweiten Bauteils plan und plattenförmig ausgeführt sind.

Weiterhin besteht im Rahmen der Erfindung die Möglichkeit, dass das zweite Bauteil zwei achsseitige Arme aufweist, die sich von einer das erste Bauteil umgreifenden Hohlstruktur nach unten und nach außen wegerstrecken, um dadurch zwei achsseitige Anbindungsstellen auszubilden, die tiefer liegen als die achsseitige Anbindungsstelle des ersten Bauteils. Bei dieser Variante wird somit das Stabilisierungsbauteil in Vertikalrichtung zu einer weiter nach unten gelegenen Stelle an der Achse geführt und dort an den beiden Anbindungsstellen jeweils mit einem Festlager an der Achse befestigt. Der dadurch entstehende größere Vertikalweg bewirkt einen größeren Hebelarm, um die Stabilisierung zu gewährleisten, und führt zu einer geringeren Beanspruchung des Bauteils. Ein weiterer Vorteil zweier solcher Anbindungsstellen ist, dass die Krafteinleitung nicht nur an einer Stelle, sondern an zwei Stellen erfolgt und sich somit gleichmäßiger über das Bauteil verteilt. Das zweite Bauteil kann folglich symmetrischer und für höhere Belastungsszenarien ausgelegt werden.

Eine weitere Variante zur Ausbildung zweier drehfester achsseitiger Anbindungsstellen des zweiten Bauteils sieht vor, dass das zweite Bauteil achsseitig mittig eine Öffnung zur Durchführung des achsseitigen Endes des ersten Bauteils sowie zwei äußere Öffnungen aufweist. Hierbei kann in die äußeren Öffnungen jeweils ein Verbindungselement, z. B. in Form einer Schweißgruppe, eingebracht sein, das sich zur achsseitigen Anbindung in Vertikalrichtung nach unten erstreckt. Auch diese Variante bietet wiederum den Vorteil eines größeren Vertikalwegs und damit größeren Hebelarms durch die tiefere Anbindung des zweiten Bauteils an der Achse und damit einer geringeren Gesamtbeanspruchung des Bauteils.

Eine weitere bevorzugte Ausgestaltungsform des Lenkers sieht vor, dass das erste Bauteil ein Dreieckslenker ist und das zweite Bauteil als eine Blattfeder ausgeführt ist. Blattfedern bieten den Vorteil, dass diese industriell günstig herstellbar sind, eine hohe Belastbarkeit aufweisen und sich lösbar und kostengünstig an einem Dreieckslenker befestigen lassen.

Eine vorteilhafte Variante sieht hierbei vor, dass ein erster Endbereich der Blattfeder eine rahmenseitige Lageraufnahme des Dreieckslenkers formschlüssig umgreift. Hierbei umrollt ein an das Lagerauge formangepasster Endbereich der Blattfeder ein rahmenseitiges Lagerauge eines Arms des Dreieckslenkers. Dies bietet den Vorteil, dass die Blattfeder von der Seite auf den Dreieckslenker aufsteckbar ist. Ferner kann die Blattfeder an einer mittleren Stelle mittels eines Halters am Dreieckslenker fixiert sein, derart, dass zumindest eine Vertikalbewegung der Blattfeder relativ zum Dreieckslenker verhindert wird. Der Halter kann beispielsweise als Bridenverschraubung, als Halteklammer oder Haltebügel ausgeführt sein. Eine Fixierung der Blattfeder im mittleren Bereich des ersten Bauteils nur in Vertikalrichtung ermöglicht der Blattfeder ein seitliches Spiel, so dass Bewegungen der Starrachse durch kleine seitliche Bewegungen der Blattfeder relativ zum ersten Bauteil kompensiert werden können und somit keine zusätzlichen Lager hierfür vonnöten sind.

Durch Variationen der Steifigkeit der Blattfeder kann somit die Steifigkeit des Lenkers auf einfache Weise variiert werden. Hierbei kann beispielsweise das Material der Blattfeder, deren Dicke oder die Anzahl der Lagen der Blattfeder variiert werden.

Gemäß einer weiteren Variante der vorgenannten Ausführungsformen mit einer Blattfeder kann die Blattfeder in einem zweiten, achsseitigen Endbereich einen weiteren Halter zur starren, drehfesten Befestigung des zweiten Endbereichs an der Achse aufweisen. Vorteilhaft ist ferner, wenn der zweite Endbereich nach unten gekrümmt ist, derart, dass dieser Endbereich tiefer als die achsseitige Lagerstelle des ersten Bauteils an der Achse gehaltert werden kann. Dies ermöglicht wiederum eine tiefere achsseitige Anbindung des zweiten Bauteils im Vergleich zum ersten Bauteil und somit wiederum einen größeren Hebelarm zur Erzielung der Stabilisierungswirkung. Gemäß der letzten Variante ist der Dreieckslenker vorzugsweise aus bauraumtechnischen Gründen ein nicht symmetrischer Dreieckslenker.

Die Anbindung des zweiten Endes an die Achse kann über eine einfache Abstützung auf der Achse erfolgen, beispielsweise über ein Einschubbauteil, in das der zweite Endbereich der Blattfeder eingeführt wird und so in Vertikalrichtung fixiert ist. Dies ermöglicht eine einfache Montage. Das Einschubbauteil kann z. B. als Einstecktasche ausgebildet sein, in die das zweite Ende in der Blattfeder eingesteckt wird. Auf diese Weise kann die Blattfeder durch einen Steck- und/oder Klemmmechanismus an der Achse befestigt werden.

Vorstehend wurde bereits erwähnt, dass das erste Bauteil und das zweite Bauteil jeweils einteilig oder mehrteilig ausgeführt sein können. Ferner können das erste Bauteil und das zweite Bauteil aus dem gleichen Material oder aus unterschiedlichen Materialien gefertigt sein. Das erste Bauteil und das zweite Bauteil können aus einem metallischen Werkstoff, beispielsweise aus einem metallischen Leichtbaumaterial wie Aluminiumschmiedewerkstoffen, oder aus nicht metallischen Verbundmaterialien wie beispielsweise karbonfaserverstärkten Kunststoffen gebildet sein.

Die Erfindung betrifft ferner ein Verfahren zur Herstellung eines Lenkers wie vorstehend beschrieben, aufweisend ein erstes Bauteil und ein mit dem ersten Bauteil lösbar oder nicht lösbar verbundenes zweites Bauteil, wobei das erste Bauteil im Wesentlichen die Längs- und Querführungseigenschaft des Lenkers festlegt und das zweite Bauteil im Wesentlichen die Rollstabilisierungseigenschaft des Lenkers festlegt. Das Verfahren umfasst die Schritte: (a) Bereitstellen des ersten Bauteils; (b) Bestimmen einer gewünschten Rollstabilisierungseigenschaft des Lenkers; (c) Auswahl eines zweiten Bauteils aus einer Mehrzahl von bereitgestellten zweiten Bauteilen mit unterschiedlichen Stabilisierungseigenschaften oder Auslegen des zweiten Bauteils derart, dass der Lenker, aufweisend das erste Bauteil und das zweite Bauteil, die gewünschte Rollstabilisierungseigenschaft aufweist; und (d) Verbinden des ersten Bauteils mit dem zweiten Bauteil.

Ferner kann das Verfahren den Schritt umfassen, die gewünschten Querführungs- und Längsführungseigenschaften des Lenkers festzulegen und das erste Bauteil entsprechend so auszulegen, dass der Lenker die gewünschten Längs- und Querführungseigenschaften aufweist. Das erfindungsgemäße Verfahren bietet somit den Vorteil, dass das erste Bauteil und das zweite Bauteil des Lenkers jeweils unabhängig voneinander optimiert und zur Erzielung der gewünschten Eigenschaften ausgelegt werden können, so dass sich auf einfache Weise ein Lenker mit den gewünschten Längsführungs-, Querführungs- und Stabilisierungseigenschaften herstellen lässt.

Die Erfindung betrifft ferner ein Kraftfahrzeug, vorzugsweise Nutzfahrzeug, mit einem Lenker wie hierin offenbart.

Weitere Einzelheiten und Vorteile der Erfindung werden im Folgenden unter Bezug auf die beigefügten Zeichnungen beschrieben. Es zeigen:
- Figuren 1A bis 1E: einen Lenker gemäß einer ersten Ausgestaltungsform;
- Figuren 2A bis 2D: einen Lenker gemäß einer zweiten Ausgestaltungsform;
- Figuren 3A bis 3C: einen Lenker gemäß einer dritten Ausgestaltungsform;
- Figuren 4A und 4B: einen Lenker gemäß einer vierten Ausgestaltungsform;
- Figuren 5A bis 5D: einen Lenker gemäß einer fünften Ausgestaltungsform;
- Figuren 6A bis 6D: einen Lenker gemäß einer sechsten Ausgestaltungsform; und
- Figuren 7A bis 7F: einen Lenker gemäß einer siebten Ausgestaltungsform.

Gleiche oder funktional äquivalente Elemente sind in allen Figuren mit denselben Bezugszeichen bezeichnet. Ferner sind gleiche Teile in den verschiedenen Figuren eines Ausführungsbeispiels mit denselben Bezugszeichen versehen, so dass die für jedes Ausführungsbeispiel gezeigten verschiedenen Ansichten auch aus sich heraus verständlich sind.

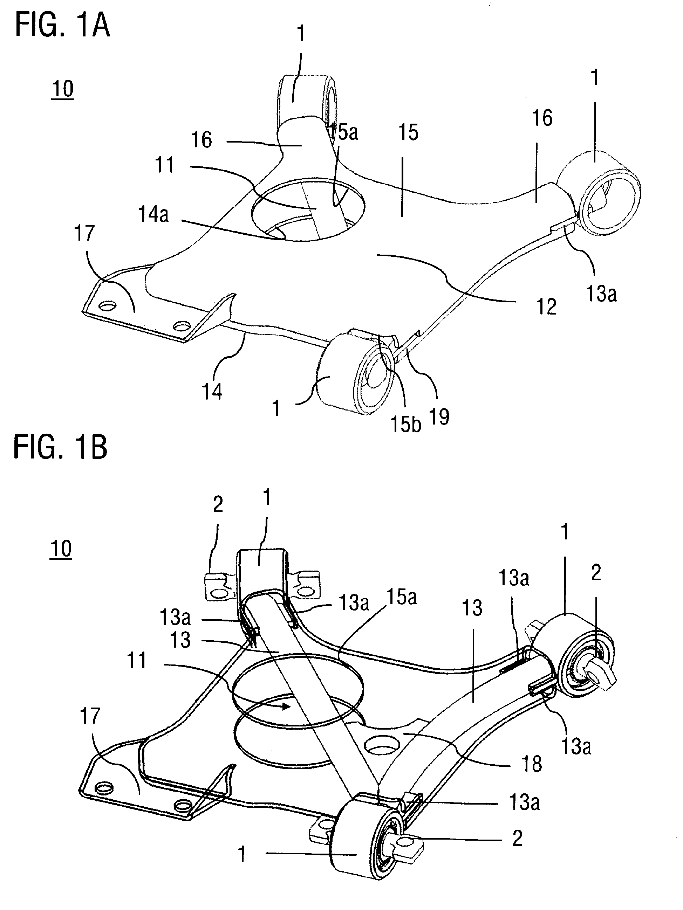

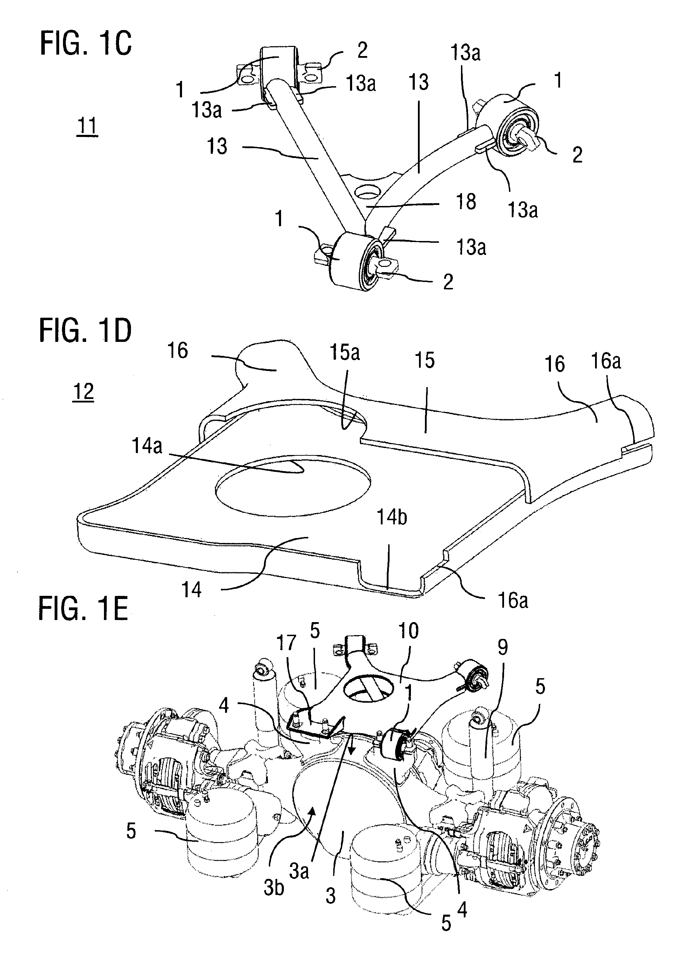

Die Figuren 1A bis 1E illustrieren eine erste Ausgestaltungsform 10 des erfindungsgemäßen Lenkers. Hierbei zeigt Figur 1A eine perspektivische Ansicht des Lenkers und Figur 1B eine transparent dargestellte perspektivische Ansicht des Lenkers 10. Figur 1C zeigt das erste Bauteil 11 des Lenkers 10 in Form eines Dreieckslenkers. Figur 1D illustriert den Aufbau des zweiten Bauteils 12 in einem Halbschnitt. Figur 1E illustriert die Anbindung des Lenkers 10 an eine starre Antriebsachse 3 eines Nutzfahrzeugs.

Der Lenker 10 umfasst ein erstes Bauteil 11 in Form eines Dreieckslenkers und ein zweites Bauteil 12 in Form einer das erste Bauteil umgreifenden Schalenstruktur. Wie in Figur 1C ersichtlich, hat der Dreieckslenker 11 zwei Lenkerarme 13, die an einem ersten Ende miteinander zur Ausbildung einer gemeinsamen achsseitigen Anlenkungsstelle verbunden sind. Die Lenkerarme 13 erstrecken sich von der gemeinsamen Anlenkungsstelle, einen spitzen Winkel zwischen sich ausbildend. In dem gemeinsamen Verbindungsbereich sind die Lenkerarme 13 zusätzlich über ein dreiecksförmiges Versteifungselement 18 verbunden, in das zusätzlich eine Durchgangsöffnung eingebracht ist. Der Dreieckslenker 11 ist als Massivbauteil ausgeführt, kann jedoch auch als Hohlbauteil ausgeführt sein.

Der Dreieckslenker 11 weist endseitig an den Armen an seinen drei Endpunkten drei hohlzylinderförmige Lageraufnahmen 1 auf, in die jeweils ein sphärisches oder kardanisches Lager 1 eingebracht ist. Das Lager 2 wird zusätzlich mit einem Elastomer ummantelt. Die Lager 2 ermöglichen somit Verdrehfreiheitsgrade, um die Zug- und Druckkräfte auf den Dreieckslenker 11 zu übertragen.

Wie in Figur 1C ferner erkennbar, weist das Lager 2 jeweils ein sich beidseitig seitlich nach außen erstreckendes knochenförmiges Verbindungselement mit zwei Durchgangsöffnungen auf, um das Lager achsseitig oder rahmenseitig zu verschrauben. Die rahmenseitige Anbindung erfolgt über die in Figur 1C gezeigten hinteren beiden Lager 2, während die achsseitige Anbindung über das gemeinsame vordere Lager 2 der beiden Lenkerarme 13 erfolgt.

Am rahmenseitigen Ende der beiden Lenkerarme 13 sind jeweils zwei laterale Stege 13a angebracht. Ebenso sind am achsseitigen Ende zwei laterale Stege 13a im Endbereich vor dem gemeinsamen Lagerauge 1 der Lenkerarme angebracht.

Der Aufbau des zweiten Bauteils 12 ist in Figur 1D dargestellt. Das zweite Bauteil 12 ist ein verwindbarer Hohlkörper, gebildet aus zwei Halbschalen 14, 15, die in einer mittleren Symmetrieebene des Hohlkörpers zusammengeschweißt sind. Grundsätzlich können zur Ausbildung des Schalenkörpers z. B. geschweißte oder hohlgegossenen Blechschalen, ein Flechtbauteil oder karbonfaserverstärkter Kunststoff verwendet werden. Die Oberseite und Unterseite der Schalenstruktur sind leicht bombiert.

Das zweite Bauteil 12 ist so ausgeführt, dass es die Lenkerarme 13 des ersten Bauteils 11 umschließen kann. Hierzu weist das zweite Bauteil 12 ein bauchiges Mittelteil auf, das im Bereich des achsseitigen Endes der Lenkerarme zwei Armenden 16 aufweist, welche formangepasst zu den Lenkerarmen sind, um diese umgreifen zu können. Die Armenden 16 weisen ferner jeweils zu den Stegen 13a formangepasste Nuten 16a auf. In den Figuren 1A und 1B ist erkennbar, dass die Stege 13a in Eingriff mit den Nuten 16a sind, wenn das zweite Bauteil 12 auf das erste Bauteil 11 aufgeschoben ist, so dass sich das zweite Bauteil 12 auf den Stegen 13a abstützt.

Am achsseitigen Ende des zweiten Bauteils, was in Figur 1D dem vorderen Ende entspricht, weist der Schalenkörper 12 an der rechten vorderen Seite eine weitere Durchgangsöffnung 14b,15b zur Durchführung des achsseitigen Endes der Lenkerarme 13 auf. Die untere Schale 14 sowie die obere Schale 15 weisen jeweils zwei zueinander konzentrisch angeordnete kreisförmige Öffnungen 14a bzw. 15a auf. Diese Öffnungen 14a, 15a dienen der optimierten Spannungsverteilung, um das zweite Bauteil weicher zu machen.

Figuren 1A und 1B zeigen den Lenker 10 im zusammengebauten Zustand. Hierbei ist erkennbar, dass das zweite Bauteil 12 den Lenker umschließt, aber nicht fest mit dem Lenker verbunden ist. Stattdessen sind die Stege 13a in die Nuten 16a gesteckt und bilden somit ein Loslager, was einen Bewegungsausgleich bei der Rollstabilisierung ermöglicht, wenn der Lenker 10 deformiert wird.

In Figur 1A ist ferner zu erkennen, dass am linken vorderen Bereich der oberen Schale 15 ein Befestigungsteil 17 angeschweißt ist, das zwei Durchgangsbohrungen aufweist. Über das Befestigungsteil 17 wird das zweite Bauteil starr und drehfest mit der Achse oder einem an der Achse befestigten Stützkörper verbunden.

Die achsseitige Anbindung des Lenkers 10 ist in Figur 1E dargestellt. Figur 1E zeigt einen üblichen Aufbau einer starren Antriebsachse eines Nutzfahrzeugs. Mit dem Bezugszeichen 3 ist der Achskörper und insbesondere die Achsbrücke bezeichnet. Hierbei erfolgt die achsseitige Anbindung des Lenkers 10 im oberen Bereich der Achsbrücke über zwei an der Achse befestigte Stützkörper 4. An der gleichen Stelle kann üblicherweise die achsseitige Anbindung eines herkömmlichen Vierpunktlenkers erfolgen, mit dem Unterschied, dass der Vierpunktlenker an beiden Anbindungspunkten mit Drehfreiheitsgraden angelenkt wird und somit keine drehfeste Anbindungsstelle aufweist, wie sie durch das Befestigungsteil 17 für das zweite Bauteil 12 realisiert wird.

Die Achsbrücke 3 selbst besteht in an sich bekannter Weise aus zwei gepressten Halbschalen, die in der Horizontalebene mittig geteilt und verschweißt sind, wobei anschließend von vorne der Deckel 3b aufgeschweißt wird und von der hinteren Seite das Achsgetriebe eingesetzt wird. Die Lenkeranbindung findet somit an der oberen Seite 3a der Achsbrücke 3 (bei einer angetriebenen Hinterachse) statt. In Figur 1E ist die Anbindung am Fahrzeugaufbau bzw. Fahrzeugrahmen nicht gezeigt. Diese erfolgt wiederum in an sich bekannter Weise über die zwei hinteren sphärischen bzw. kardanischen Lager des Lenkers 10, analog zur rahmenseitigen Anbindung eines herkömmlichen Vierpunktlenkers. Mit dem Bezugszeichen 5 sind die auf einem Luftfederträger angeordneten Luftfederbälge bezeichnet.

Im Bauteilverbund des Lenkers 10 wirken auf den Dreieckslenker 11 Zug- und Druckkräfte. Der Dreieckslenker 11 bewirkt die Längs- und Querführung. Aufgrund der beweglichen Lager 2, die Verdrehfreiheitsgrade aufweisen, bewirkt der Dreieckslenker 11 keine Rollstabilisierung. Diese wird durch das zweite Bauteil 12 ausgeübt, das ein Torsionsmoment über die drehfeste achsseitige Anbindung aufnimmt und sich hierbei über die Stege 13a auf dem ersten Bauteil 11 abstützt. Die Rollstabilisierungseigenschaft bzw. die Verwindbarkeit des zweiten Bauteils 12 kann beispielsweise durch Variation der Wandstärke oder der Geometrie des zweiten Bauteils festgelegt werden.

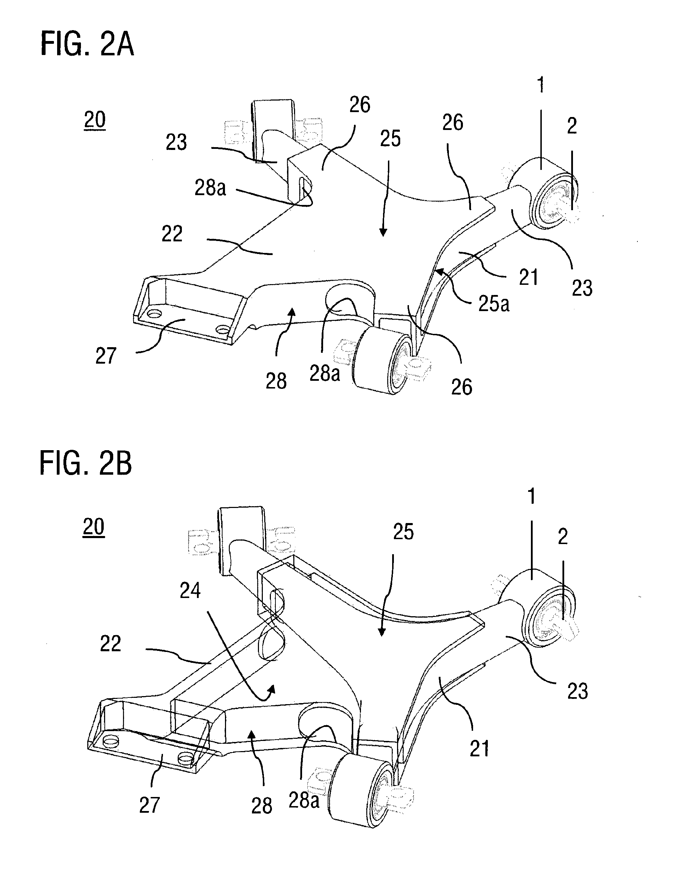

Die Figuren 2A bis 2D illustrieren eine zweite Ausgestaltungsform der Erfindung. Der Lenker 20 besteht wiederum aus einem ersten Bauteil 21, das die Querführungs- und Längsführungseigenschaften des Lenkers 20 festlegt, und einem zweiten Bauteil 22, das die Rollstabilisierungseigenschaften des Lenkers 20 bestimmt.

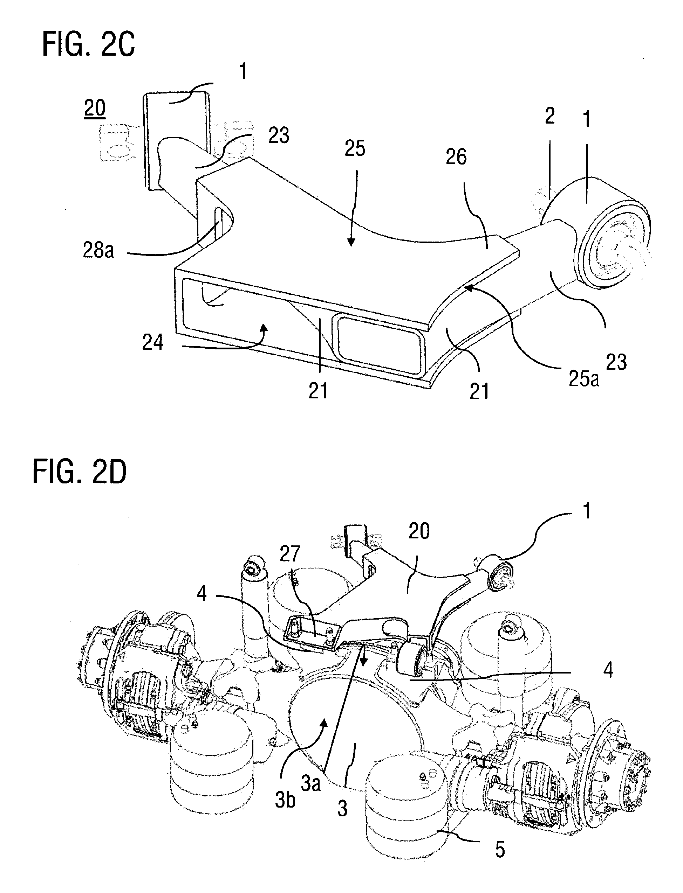

Eine Besonderheit dieser Ausgestaltungsform liegt darin, dass die Abstützung des rollstabilisierenden Bauteils 22 gegenüber dem Lenker 21 auf den Lenkerhälsen bzw. Lenkerarmen 23 erfolgt. Gemäß dieser Ausführungsvariante ist das erste Bauteil 21 wiederum als Dreieckslenker ausgeführt. Hierbei ist der Dreieckslenker 21 als Hohlbauteil und als symmetrischer Dreieckslenker ausgeführt, was in den Ansichten der Figur 2B und 2C erkennbar ist.

Das zweite Bauteil 22 bildet wieder eine den Dreieckslenker 21 umgreifende Hohlstruktur aus und weist eine Oberseite 25 und eine Unterseite 24 auf, die plan und plattenförmig ausgeführt sind. Das zweite Bauteil 22 ist zu zwei benachbarten Seiten hin offen. Dadurch kann das zweite Bauteil 22 auf das erste Bauteil 21 aufgesteckt werden, so dass sich die obere und untere Platte 24 und 25 auf den Lenkerarmen 23 abstützen. In Figur 2A ist das zweite Bauteil 22 z. B. zur rechten Seite und zur hinteren Seite hin offen, so dass die Armendbereiche 26 des zweiten Bauteils auf die Lenkerarme 23 aufgeschoben werden können und sich dort abstützen.

Die Ausgestaltungsform 20 des Lenkers kann mittels einfacher Fügetechnologien hergestellt werden und ist somit fertigungstechnisch besonders vorteilhaft. An den nicht offenen Seitenbereichen 28 des zweiten Bauteils 22 sind wiederum Öffnungen 28a eingebracht und zwar an oder angrenzend zu der Stelle, an der das zweite Bauteil 22 den Lenkerhals 23 des ersten Bauteils umgreift. Die Öffnungen 28a dienen wiederum zur Verbesserung der Spannungsverteilung. Analog zu der ersten Ausgestaltungsform ist an der linken vorderen Seite zur achsseitigen Anbindung wieder ein Befestigungselement 27 angeordnet, an dem das zweite Bauteil starr und drehfest mit dem Achskörper oder einem am Achskörper befestigten Stützelement 4 verschraubt wird. Dies ist in Figur 2D dargestellt.

Auch gemäß dieser Ausgestaltungsform 20 erfolgt die achsseitige und rahmenseitige Anbindung des Lenkers an denselben Stellen, an denen ein herkömmlicher Vierpunktlenker angelenkt wird, mit dem Unterschied, dass der erfindungsgemäße Lenker aus dem erfindungsgemäßen Bauteilverbund 21, 22 gebildet ist und über eine starre achsseitige Anbindungsstelle 27 verfügt. Auch hier kann die Stabilisierungseigenschaft des Lenkers durch Variation der Wandstärke und/oder Geometrie und/oder der Materialauswahl für das zweite Bauteil 22 gezielt verändert werden.

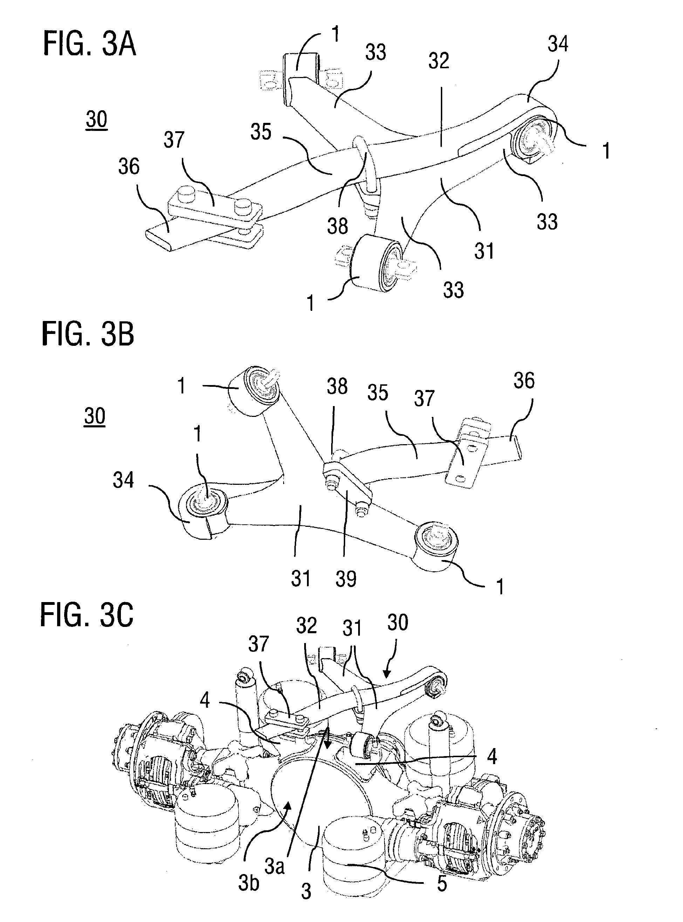

In den Figuren 3A bis 3C ist eine weitere Ausgestaltungsform der Erfindung illustriert. Der Lenker 30 besteht wiederum aus einem ersten Bauteil 31 in Form eines Dreieckslenkers. Die Besonderheit dieser Ausgestaltungsform liegt darin, dass das zweite Bauteil in Form einer Blattfeder 32 ausgeführt ist.

Die Blattfeder 32 umrollt an ihrem hinteren Endbereich 34 ein rahmenseitiges Lagerauge 1 des ersten Bauteils 31. Derartige Blattfedern 32 sind mit einem Walzprozess industriell günstig herstellbar. Die Blattfeder 32 ist an einer mittleren Stelle 35 mit einer Bridenverschraubung 38 am Dreieckslenker 31 befestigt, um eine Vertikalbewegung der Blattfeder 32 relativ zum Dreieckslenker 31 zu verhindern. Der Bügel 38 der Bridenverschraubung umgreift die Blattfeder 32 und wird über die Bohrungen in den unteren Trägern mit Muttern festgezogen. Die Bügelhalterung 39 der Bridenverschraubung ist an dem Lenker angeschmiedet. Bei einem aus einem Verbundwerkstoff gefertigten Dreieckslenker 31 kann die Bügelhalterung in Form eines Einlegestücks als Teil des Verbundbauteils ausgebildet sein.

Im achsseitigen Endbereich 36 der Blattfeder ist ein weiterer Halter 37 angeordnet, um die Blattfeder 32 an dieser Stelle drehfest mit dem Achskörper zu verschrauben. Dies ist Figur 3C dargestellt. Die achsseitige Anbindung des Lenkers 30 erfolgt wiederum an den Anbindungsstellen eines herkömmlichen Vierpunktlenkers.

Ein besonderer Vorteil dieser Ausgestaltungsform liegt darin, dass mit einer derartigen Blattfeder ein hoch beanspruchbares Bauteil bereitgestellt werden kann, wobei die Stabilisierungseigenschaft des Bauteils auf eine Weise durch Veränderung der Steifigkeit der Blattfeder 32, z. B. durch Variation der Wandstärke der Blattfeder 32 oder durch Anzahl der verwendeten Blätter der Blattfeder 32, gezielt angepasst werden kann.

Ferner ist das zweite Bauteil 32 wiederum lösbar mit dem ersten Bauteil 31 durch Klemm- und Steckverbindungen verbunden, wie in Figur 3A gezeigt. Dadurch wird eine einfache Montage und ggf. auch ein Austausch des zweiten Bauteils ermöglicht.

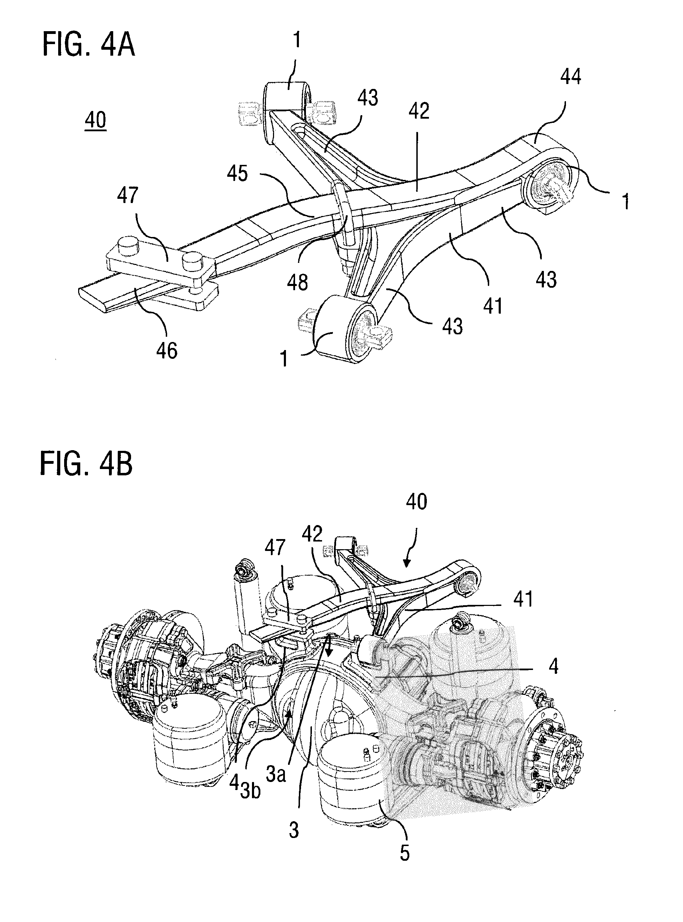

Eine weitere Ausgestaltungsform ist in den Figuren 4A und 4B dargestellt. Der Lenker 40 besteht wiederum aus einem Dreieckslenker 41 als erstes Bauteil und einer Blattfeder 42 als zweites Bauteil. Die Blattfeder 42 ist wiederum an ihrem hinteren Ende 44 so ausgeführt, dass sie ein rahmenseitiges Lagerauge des Dreipunktlenkers umrollt und so seitlich auf das Lagerauge aufgesteckt werden kann. In einer weiteren Ausgestaltungsform kann ein zusätzliches Elastomer oder eine Kunststoffeinlage zwischen Außenumfang des Lagerauges 1 und der inneren Kontaktfläche des hinteren Bereichs 44 der Blattfeder eingebracht sein. Es können zwar weiterhin Kräfte übertragen werden, aber die Blattfeder wird von Erschütterungen des Dreieckslenkers besser entkoppelt. Das achsseitige Ende 46 der Blattfeder 42 wird wiederum mit einem Halter 47 am Achskörper 3 befestigt. Im Unterschied zu dem Ausführungsbeispiel der Figuren 3A bis 3C ist der Dreieckslenker 41 als Schmiedeteil, beispielsweise als Aluminiumschmiedeteil, ausgeführt.

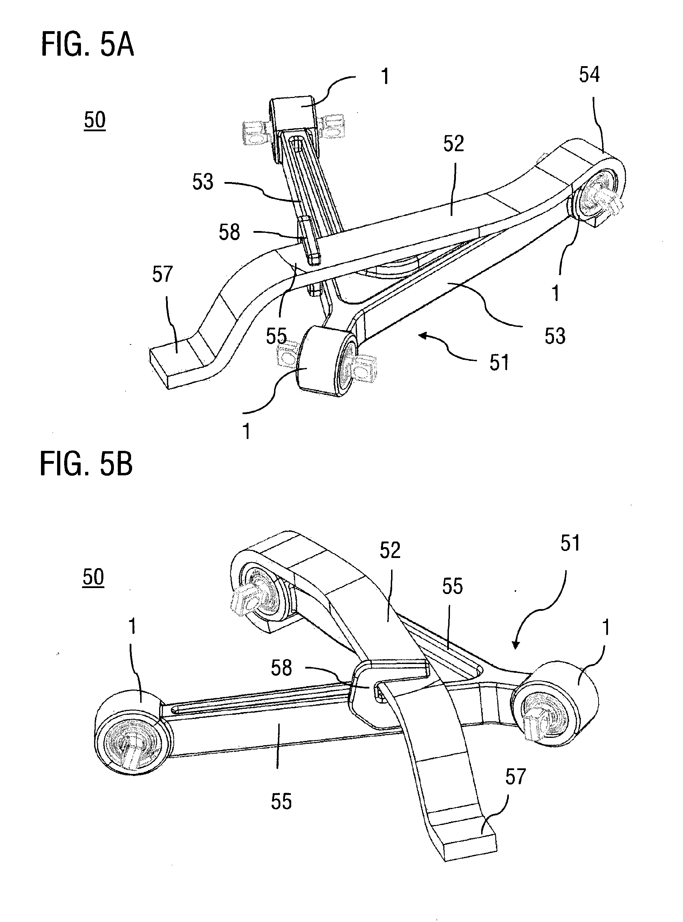

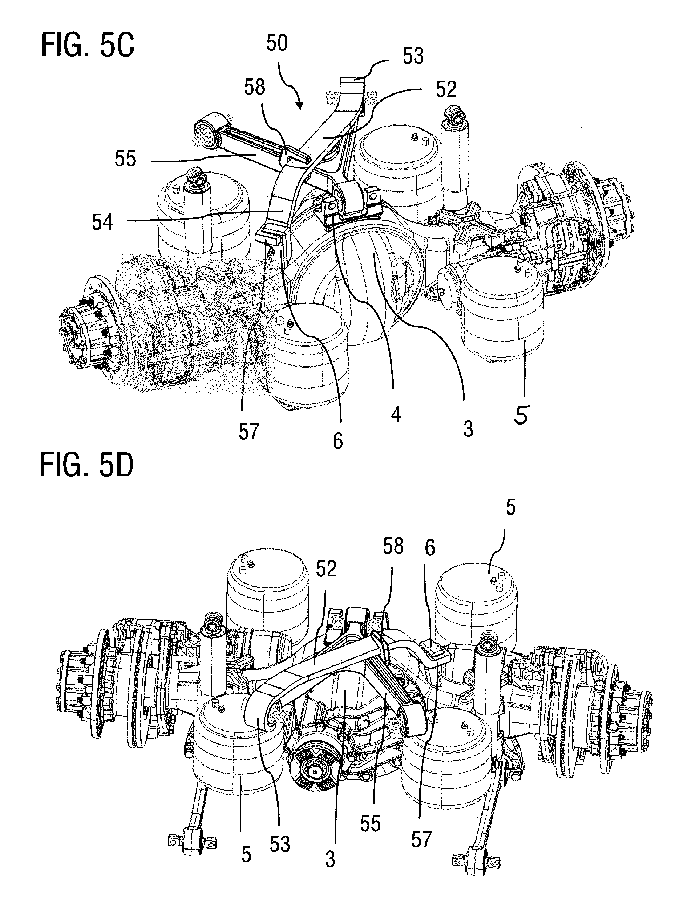

Eine weitere Variante ist in den Figuren 5A bis 5D gezeigt. Eine Besonderheit dieses Ausführungsbeispiels eines Kombilenkers 50 liegt darin, dass das freie Ende 57 der Blattfeder 52 nach unten gekrümmt ist und dadurch tiefer als die achsseitige Lagerstellte des ersten Bauteils 51 am Achskörper 3 befestigt werden kann. Dies ist in den Figuren 5C und 5D gezeigt. Die achsseitige Anbindung des Dreieckslenkers 51 erfolgt im oberen Bereich der Achsbrücke 3, während die achsseitige Anbindung der Blattfeder 52 den großen Kessel des Achsgetriebegehäuses 3 übergreift und vertikal weiter unten am Achsgetriebegehäuse 3 in eine dort angeschweißte Halterung 6 eingesteckt ist. Ein weiterer Vorteil ist, dass die Halterung 6 als Klammer oder Einstecktasche ausgeführt sein kann, so dass die achsseitige Anbindung der Blattfeder 52 einfach durch ein Stecken des unteren Endes 57 in die Halterung 6 erfolgt. Der Dreieckslenker 51 ist im vorliegenden Beispiel wieder als Schmiedeteil ausgeführt, jedoch hier als nicht symmetrischer Dreieckslenker, bei dem der gemeinsame Schnittpunkt der Lenkerarme zur achsseitigen Anbindung hin verlagert ist. Auf die einzelnen Arme 53 des Dreieckslenkers 51 wirken idealerweise nur Zug- und Druckbeanspruchungen. In dem hinteren Ende 54 der Blattfeder 52 wird wiederum ein rahmenseitiges Lagerauge 1 des Dreieckslenkers 51 aufgesteckt, wie zuvor beschrieben.

Eine weitere Besonderheit bei dieser Ausgestaltungsform liegt darin, dass die Anbindung eines mittleren Bereichs 55 der Blattfeder 52 am Dreieckslenker 51 über einen Haltebügel 58 erfolgt. Dies ermöglicht wieder eine besonders einfache Fixierung der Blattfeder am Dreieckslenker, um eine vertikale Bewegung der Blattfeder relativ zum Dreieckslenker 51 zu verhindern, aber ein seitliches Spiel der Blattfeder 52 ermöglicht, so dass seitliche Bewegungen der Starrachse kompensiert werden können.

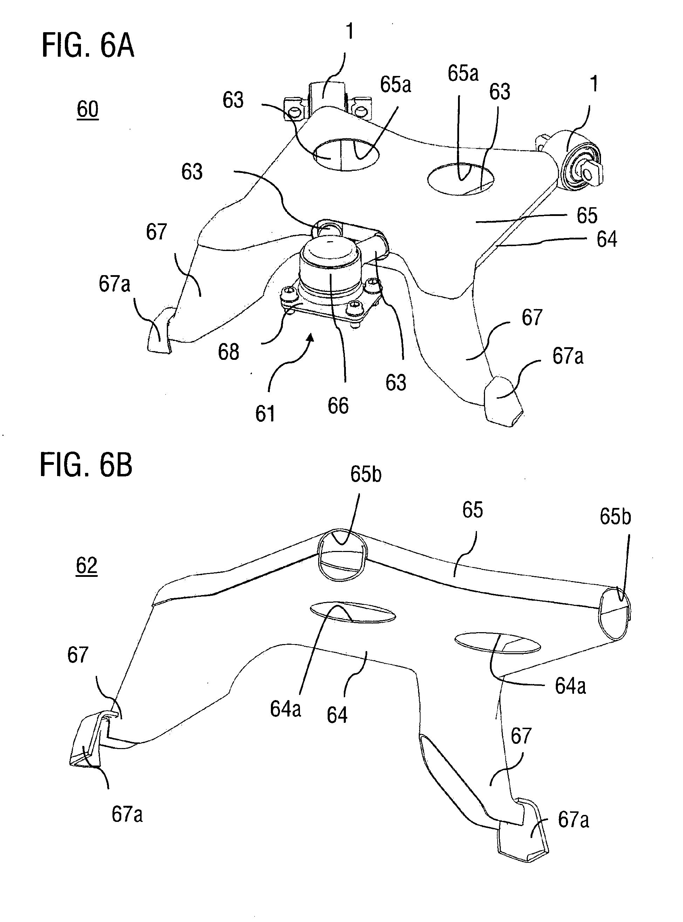

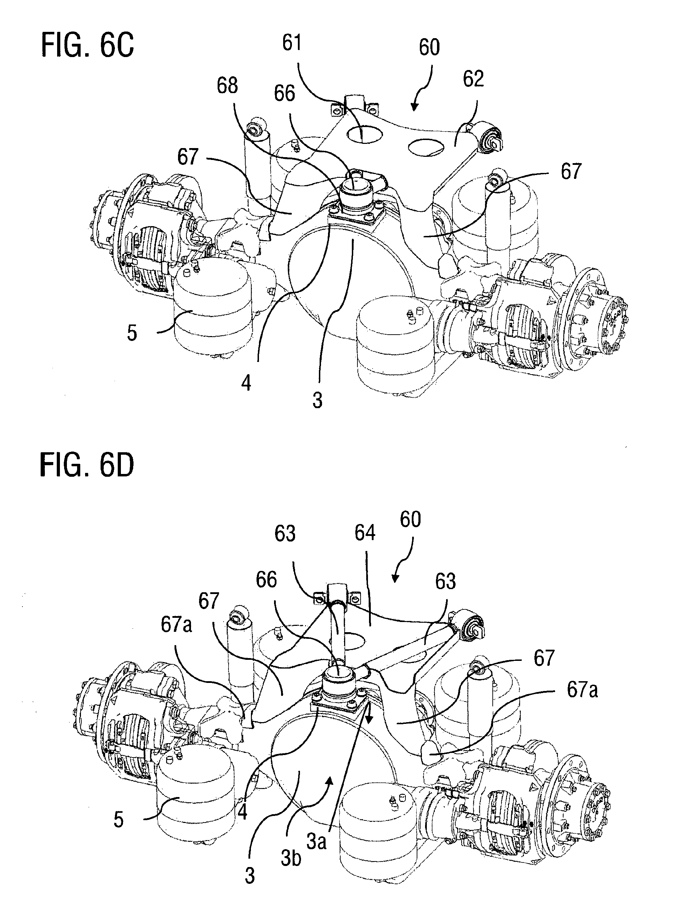

Die Figuren 6A bis 6D illustrieren eine weitere Ausgestaltungsform. Der Lenker 60 besteht wiederum aus einem Dreieckslenker 61 und einer den Dreieckslenker 61 umgreifenden Hohlstruktur als zweites Bauteil 62. Gemäß dieser Ausführungsvariante hat der Dreieckslenker 61 nur ein mittiges Gelenk zur achsseitigen Anbindung und wird über vier Schrauben und eine Balkonplatte 68 mit dem Achskörper verschraubt, was in Figur 6C dargestellt ist. Hierzu wird eine Stützplatte 4 auf die Oberseite des Achskörpers 3 aufgeschweißt, um eine plane Aufstandsfläche auszubilden.

Der Aufbau des zweiten Bauteils 62 ist in Figur 6B dargestellt. Das zweite Bauteil 62 besteht wiederum aus einer zweiteiligen Schalenstruktur mit einer Unterschale 64 und einer Oberschale 65, die in einer horizontalen Ebene miteinander verschweißt werden. Zur Durchführung der Lenkerarme 63 weist der Schalenkörper 62 achsseitig zwei an die Lenkerarme 63 formangepasste Durchgangsöffnungen 65b auf. Die untere Schale 64 und die oberen Schale 65 weisen wiederum kreisförmige Öffnungen 64a bzw. 65a zur verbesserten Spannungsverteilung auf, wie vorstehend bereits im Zusammenhang mit der ersten Ausgestaltungsform beschrieben.

Eine Besonderheit dieser Ausgestaltungsform 60 liegt darin, dass das zweite Bauteil 62 achsseitig zwei Arme 67 aufweist, die als Teil der unteren Schale 64 ausgebildet sind und sich nach unten und außen wegerstrecken zur Ausbildung zweiter achsseitiger Anbindungsstellen, die tiefer liegen als die achsseitige Anbindungsstelle 66, 68 des ersten Bauteils 61. Dies ist in den Figuren 6C und 6D dargestellt. Die Arme 67 sind so ausgeführt, dass damit der große Kessel des Achsgetriebegehäuses 3 durch die Arme übergriffen werden kann und die Anbindung an einer im Vergleich zur Anbindung des Dreieckslenkers tiefer gelegenen Stelle am Achskörper 3 erfolgen kann. Dies ermöglicht einen größeren Hebelarm zur Aufnahme eines Torsionsmoments und ermöglicht dadurch eine geringere Gesamtbeanspruchung des Bauteils. Ein weiterer Vorteil der zwei symmetrisch zur achsseitigen Anbindungsstelle des ersten Bauteils liegenden drehfesten Anbindungspunkte ist, dass das zweite Bauteil 62 symmetrisch ausgelegt werden kann.

Die achsseitige Festlegung findet somit nicht nur an einer, sondern an zwei Stellen statt, was eine besser verteilte Einleitung des Torsionsmoments ermöglicht. Hierbei erfolgt die achsseitige Festlegung über zwei Befestigungskappen 67a, die fest auf der Achse angeschweißt sind. Der achsseitige Endbereich der Arme 67 weist jeweils einen sich in Horizontalrichtung nach außen erstreckenden Halteabschnitt auf, der an die Haltekappen formangepasst ist und der in eine Kappe 67a eingeschoben wird, was in Figur 6B ersichtlich ist. Dadurch kann der Kombilenker 60 auf die Achse aufgeschoben werden und ist in Vertikalrichtung durch die Kappen 67a festgelegt. Anstatt den gezeigten Haltekappen 67a können auch Haltebügel oder andere geeignete Befestigungs- oder Anbindungselemente verwendet werden.

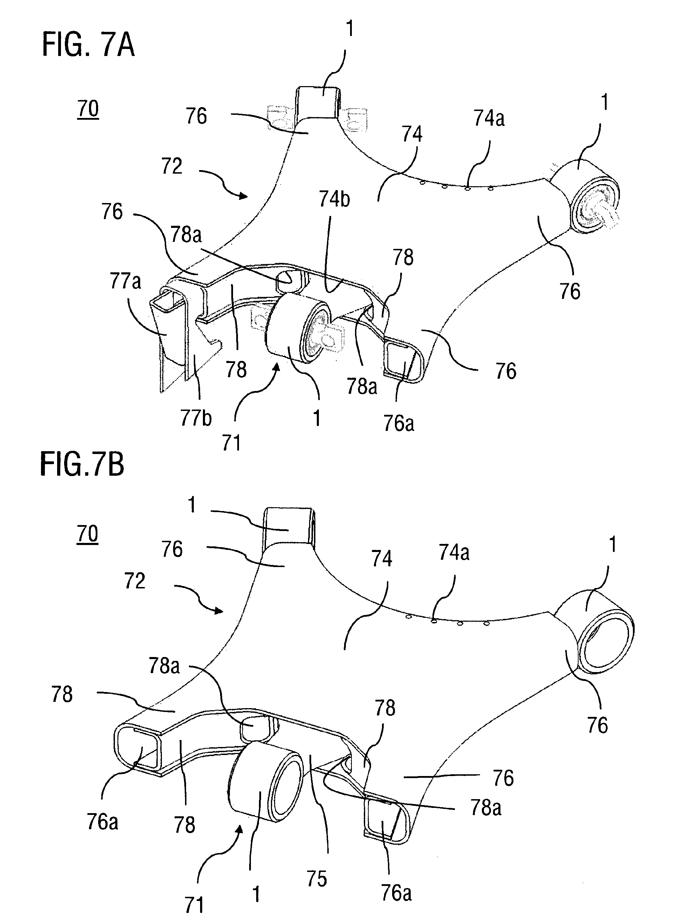

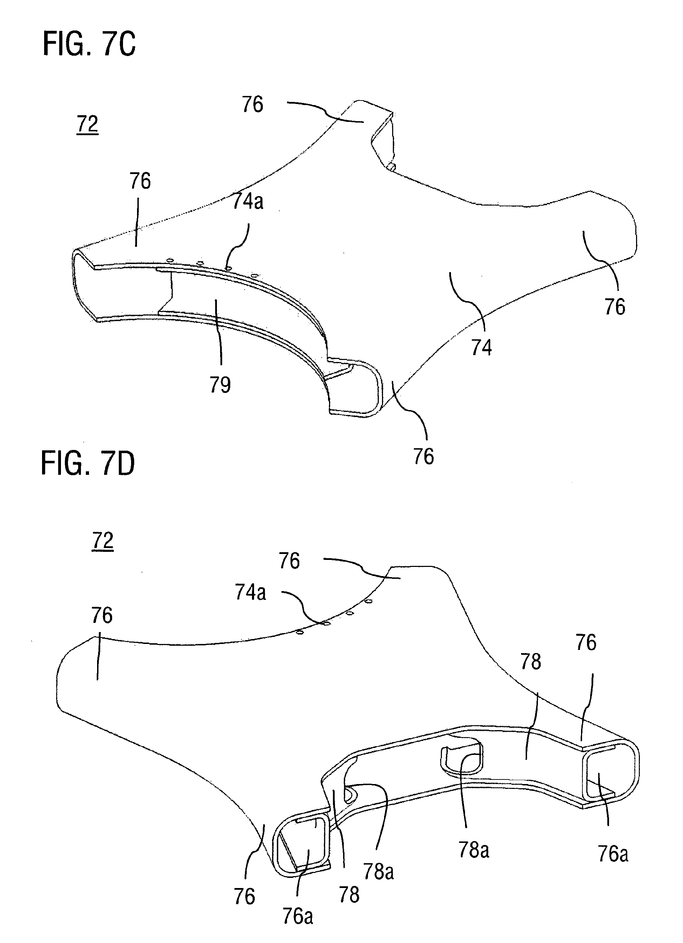

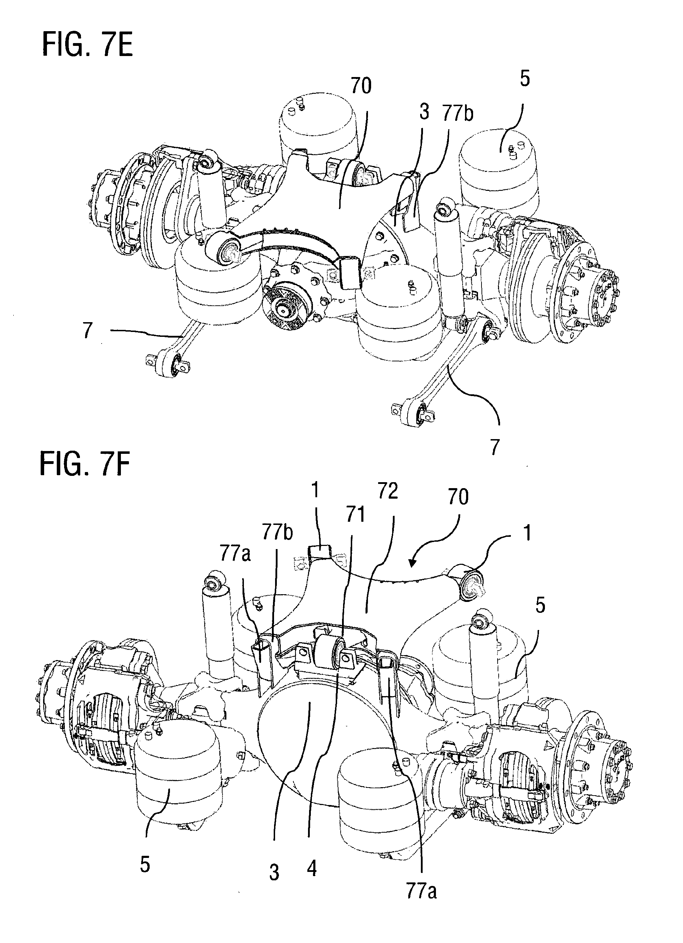

Die Figuren 7A bis 7F zeigen ein weiteres Ausführungsbeispiel. Der Lenker 70 besteht wiederum aus einem ersten Bauteil 71 in Form eines Dreieckslenkers und einem zweiten Bauteil 72, das als Hohlkörper ausgeführt ist und das erste Bauteil umgreift. Als erstes Bauteil kann ein Dreieckslenker gemäß einer der vorgehend beschriebenen Ausführungsbeispiele verwendet werden. Das zweite Bauteil 72 besteht, wie in den Figuren 7C und 7D erkennbar, aus einem schalenförmigen Grundkörper 74 mit zwei rahmenseitigen Armenden 76 und zwei achsseitigen Armenden 76.

Der Grundkörper 74 kann als Blechpressteil vorgefertigt werden. Der Grundkörper 74 ist zur Achsseite und Rahmenseite hin offen. Am achsseitige Ende wird links- und rechtsseitig zwischen die Ober- und Unterschale jeweils ein Blechpressteil 78 eingesetzt und mit dem Grundkörper 74 verschweißt. Das Blechpressteil 78 und der Grundkörper 74 bildet somit achsseitig zwei Öffnungen 76a zur Aufnahme eines Befestigungselements 77a, 77b aus, was nachfolgend noch beschrieben wird. Das Blechpressteil 78 weist zwei Ausnehmungen 78a auf, die wiederum eine verbesserte Spannungsverteilung ermöglichen. Der mit dem Blechpressteilen 78 verschweißte Grundkörper 74 wird anschließend auf den Dreipunktlenker 71 gesteckt.

Die eingesetzten Blechpressteile 78 bilden eine vordere Öffnung 74b aus, durch die ein achsseitiger Endbereich 75 der Lenkerarme durchgeführt werden kann.

Am rahmenseitigen Ende können anschließend vorgefertigte Blechpressteile in Form von U-förmigen Blechpresswinkel 79 eingesetzt werden und am Grundkörper 74 an den Stellen 74a durch Verschrauben oder alternativ über Punktschweißen oder Schweißen befestigt werden.

Über die Variation der Geometrie und der Wandstärke des Blechpressteils 78 kann die Stabilisierungseigenschaft des zweiten Bauteils 72 und damit des gesamten Lenkers 70 variiert und festgelegt werden. Vorzugsweise wird somit eine Vielzahl unterschiedlicher Blechpressteile vorgehalten, aus denen jeweils eines ausgewählt wird, das die gewünschten Stabilisierungseigenschaften des Lenkers 70 ausbildet.

Ein besonderer Vorteil dieser Ausführungsform 70 ist, dass die einzelnen Komponenten, aus denen das erste Bauteil 71, das zweite Bauteil 72 und der gesamte Lenker 70 hergestellt werden, Geometrien aufweisen, die einfach und kostengünstig herzustellen sind. Ferner können die einzelnen Bauteile vorgefertigt und vor dem Zusammenbau des Lenkers endbearbeitet werden. Schließlich kann die Stabilisierungseigenschaft maßgeblich nur durch ein zusätzliches kleines Bauteil eingestellt und variiert werden.

Die achsseitige Lagerung des Dreieckslenkers 71 erfolgt mittels eines sphärischen oder kardanischen Lagers 2 an der Oberseite 3a der Achsbrücke 3. Links- und rechtsseitig hiervon erfolgt die drehfeste Anbindung des zweiten Bauteils 72. Hierzu wird jeweils eine Schweißgruppierung 77a, 77b aus zwei miteinander verschweißten Teilen in die Öffnungen 76a des zweiten Bauteils 72 eingebracht. Das Bauteil 77b der Schweißgruppierung 77a, 77b wird am Achskörper verschweißt. Gemäß einer weiteren vorteilhaften Variante (nicht dargestellt) ist zwischen der Innenseite der Öffnung 76a und dem Bauteil 77b ein Elastomer eingebracht, wodurch die Schweißgruppierung 77a, 77b in der Öffnung 76a gepuffert gehaltert ist. Dadurch können weiterhin Vertikallasten übertragen werden, jedoch werden gegenseitige Beanspruchungen der Bauteile 77a, 77b und des Grundkörpers 74 reduziert. Darüber hinaus wird durch die Elastomereinlage bzw. -beschichtung eine Entkopplung von Achse und Rahmen begünstigt, welche den Fahrkomfort positiv beeinflusst.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Zusätzlich können viele Modifikationen ausgeführt werden, ohne den zugehörigen Bereich zu verlassen. Es wird ferner betont, dass die zweiten Bauteile mit unterschiedlichen Varianten der Dreieckslenker kombiniert werden können, insbesondere der Dreieckslenker der anderen Ausführungsbeispiele. Folglich soll die Erfindung nicht auf die offenbarten Ausführungsbeispiele begrenzt sein, sondern die Erfindung soll alle Ausführungsbeispiele umfassen, die in den Bereich der beigefügten Patentansprüche fallen.

### Bezugszeichenliste

- 1: Lageraufnahme (Lagerauge)
- 2: Lager
- 3: Achskörper, Achsbrücke
- 3a: Vordere Abdeckung der Achsbrücke
- 3b: Oberer Bereich des Achskörpers
- 4: Stützelement
- 5: Luftfederbalg
- 6: Halterung
- 10: Lenker
- 11: Erstes Bauteil, Dreieckslenker
- 12: Zweites Bauteil, Schalenstruktur
- 13: Lenkerarm
- 13a: Steg
- 14, 15: Halbschalen
- 14a, 15a: Kreisförmige Öffnung
- 14b, 15b: Durchgangsöffnung
- 16: Armende
- 16a: Nutförmige Ausnehmung
- 17: Befestigungsteil
- 18: Versteifungselement
- 20: Lenker
- 21: Erstes Bauteil, Dreieckslenker
- 22: Zweites Bauteil
- 23: Lenkerarm
- 24: Untere Platte
- 25: Obere Platte
- 26: Armendbereich
- 27: Befestigungselement
- 28: Offener Seitenbereich
- 28a: Ausnehmung
- 30: Lenker
- 31: Erstes Bauteil, Dreieckslenker
- 32: Zweites Bauteil, Blattfeder
- 33: Lenkerarm
- 34: Hinterer Endbereich der Blattfeder
- 35: Mittlerer Bereich der Blattfeder
- 36: Achsseitiger Endbereich der Blattfeder
- 37: Halter
- 38: Bridenverschraubung
- 39: Bügelhalterung
- 40: Lenker
- 41: Erstes Bauteil, Dreieckslenker
- 42: Zweites Bauteil, Blattfeder
- 43: Lenkerarm
- 44: Rahmenseitiger Endbereich der Blattfeder
- 45: Mittlerer Bereich der Blattfeder
- 46: Achsseitiger Endbereich der Blattfeder
- 47: Halter
- 48: Bridenverschraubung
- 50: Lenker
- 51: Erstes Bauteil, Dreieckslenker
- 52: Zweites Bauteil, Blattfeder
- 53: Lenkerarm
- 54: Rahmenseitiges Ende der Blattfeder
- 55: Mittlerer Bereich der Blattfeder
- 57: Nach unten gekrümmtes Ende der Blattfeder
- 58: Haltebügel
- 60: Lenker
- 61: Erstes Bauteil, Dreieckslenker
- 62: Zweites Bauteil
- 63: Lenkerarm
- 64: Untere Halbschale
- 64a, 65a: Kreisförmige Öffnung
- 65: Obere Halbschale
- 65b: Öffnung
- 66: Achsgelenk
- 67: Achsseitige Arme
- 67a: Befestigungskappen
- 68: Balkonplatte
- 70: Lenker
- 71: Erstes Bauteil, Dreieckslenker
- 72: Zweites Bauteil
- 74: Schalenförmiger Grundkörper
- 74a: Öffnung, Befestigungspunkte
- 74b: Öffnung
- 75: Achsseitiger Endbereich der Lenkerarme
- 76: Armende des zweiten Bauteils
- 76a: Öffnung
- 77a, 77b: Schweißgruppierung
- 78: Blechpressteil
- 78a: Ausnehmung
- 79: Blechpresswinkel

## Patentansprüche

1. Lenker (10; 20; 30; 40; 50; 60; 70) zur Anbindung einer Fahrzeugachse an einem Fahrzeugrahmen eines Kraftfahrzeugs und zur Längsführung, Querführung und Rollstabilisierung, aufweisend ein erstes Bauteil (11; 21; 31; 41; 51; 61; 71) und ein mit dem ersten Bauteil lösbar oder nicht lösbar verbundenes zweites Bauteil (12; 22; 32; 42; 52; 62; 72), **dadurch gekennzeichnet, dass** die Längs- und Querführungseigenschaft des Lenkers im Wesentlichen durch das erste Bauteil (11; 21; 31; 41; 51; 61; 71) und die Rollstabilisierungseigenschaft des Lenkers im Wesentlichen durch das zweite Bauteil (12; 22; 32; 42; 52; 62; 72) festgelegt ist.

2. Lenker nach Anspruch 1, **dadurch gekennzeichnet,**
(a) **dass** das erste Bauteil ein Dreieckslenker ist; und/oder
(b) **dass** das erste Bauteil zwei Lageraufnahmen (1) zur rahmenseitigen Anbindung des Lenkers und eine Lageraufnahme (1) zur achsseitigen Anbindung des Lenkers aufweist; und/oder
(c) **dass** das erste Bauteil mittels beweglicher Lager (2), die Verdrehfreiheitsgrade aufweisen und die Zug- und Druckkräfte auf den Lenker übertragen, am Fahrzeugrahmen und der Fahrzeugachse anbindbar ist.

3. Lenker nach Anspruch 1 oder 2, **dadurch gekennzeichnet, dass** das zweite Bauteil mindestens eine Stelle (17; 27; 37; 47; 57; 67, 67a; 76, 77a, 77b) zur starren, drehfesten achsseitigen Anbindung aufweist.

4. Lenker nach einem der vorhergehenden Ansprüche, **dadurch gekennzeichnet, dass** das zweite Bauteil (12; 22; 32; 42; 52; 62; 72) auf einem Abschnitt des ersten Bauteils (11; 21; 31; 41; 51; 61; 71) im Bereich der rahmenseitigen Anbindung formschlüssig und/oder nicht fest verbunden aufliegt und selbst nicht unmittelbar am Rahmen befestigt ist.

5. Lenker (10; 20; 60; 70) nach einem der vorhergehenden Ansprüche, **dadurch gekennzeichnet, dass** das zweite Bauteil (12; 22; 62; 72) eine das erste Bauteil (11; 21; 61; 71) umgreifende Hohlstruktur aufweist.

6. Lenker (70) nach Anspruch 5, **dadurch gekennzeichnet, dass** an der das erste Bauteil (71) umgreifenden Hohlstruktur (74) ein Stabilisierungseinsatz (79) befestigbar ist und/oder befestigt ist.

7. Lenker (10; 20; 30; 40; 50) nach einem der vorhergehenden Ansprüche, **dadurch gekennzeichnet, dass** das zweite Bauteil (12; 22; 32; 42; 52) genau eine Stelle zur starren, drehfesten achsseitigen Anbindung aufweist und dass das erste Bauteil und das zweite Bauteil einen Vierpunktlenker (10; 20; 30; 40; 50) mit zwei rahmenseitigen und zwei achsseitigen Anbindungsstellen ausbilden.

8. Lenker (60; 70) nach einem der vorhergehenden Ansprüche, **dadurch gekennzeichnet, dass** das zweite Bauteil (62; 72) zwei Stellen zur starren, drehfesten achsseitigen Anbindung aufweist, wobei die achsseitige Anbindung des ersten Bauteils (61; 71) mittig zwischen den beiden achsseitigen Anbindungsstellen des zweiten Bauteils (62; 72) angeordnet ist.

9. Lenker (10; 60, 70) nach einem der Ansprüche 5 bis 8, **dadurch gekennzeichnet, dass** das zweite Bauteil (12; 62; 72) eine das erste Bauteil (11; 61; 71) umgreifende Schalenstruktur aufweist.

10. Lenker (20) nach einem der Ansprüche 5 bis 8, **dadurch gekennzeichnet,**
(a) **dass** das zweite Bauteil (22) an den Lenkerarmen (23) des ersten Bauteils (21) aufliegt und sich dort abstützt; und/oder
(b) **dass** eine Oberseite (25) und eine Unterseite (24) des zweiten Bauteils (22) plan und plattenförmig ausgeführt sind und dass das zweite Bauteil (22) zumindest zu zwei benachbarten Seiten hin offen ist, um das zweite Bauteil (22) auf das erste Bauteil (21) aufstecken zu können.

11. Lenker nach Anspruch 5 bis 10, **dadurch gekennzeichnet,**
(a) **dass** das zweite Bauteil (12; 62) auf der Oberseite (15; 5) und/oder Unterseite (14; 64) eine Öffnung (14a, 15a; 64a, 65a) aufweist, die vorzugsweise kreisförmig ausgeführt ist; und/oder
(b) **dass** ein Seitenbereich (28; 78) des zweiten Bauteils (22; 72) eine Öffnung (28a; 78a) aufweist, die an oder angrenzend zu einer Stelle, an der das zweite Bauteil (22; 72) einen Lenkerhals (23; 73) des ersten Bauteils (21; 71) umgreift, vorgesehen ist.

12. Lenker (10) nach einem der Ansprüche 5 bis 11, **dadurch gekennzeichnet,**
(a) **dass** das erste Bauteil (11) ein Dreieckslenker mit an den Lenkerarmen (13) jeweils endseitig angeformten Stegen (13a) ist; und
(b) **dass** das zweite Bauteil (12) drei an die Lenkerarme formangepasste Armenden (16) aufweist, die die Lenkerarme (13) umgreifen; und
(c) **dass** die Armenden (16) ferner jeweils zu den Stegen (13a) formangepasste Nuten (16a) aufweisen, um das zweite Bauteil (12) auf das erste Bauteil (11) aufzustecken und um das zweite Bauteil auf den Stegen (13a) abzustützen.

13. Lenker (60) nach einem der Ansprüche 8 bis 12, **dadurch gekennzeichnet, dass** das zweite Bauteil (61) zwei achsseitige Arme (67) aufweist, die sich von einer das erste Bauteil (61) umgreifenden Hohlstruktur (64, 65) nach unten und außen wegerstrecken zur Ausbildung zweier achsseitiger Anbindungsstellen (67a), die tiefer liegen als die achsseitige Anbindungsstelle (66, 68) des ersten Bauteils (61).

14. Lenker (70) nach einem der Ansprüche 8 bis 12, **dadurch gekennzeichnet,**
(a) **dass** das zweite Bauteil (61) achsseitig mittig eine Öffnung (74b) zur Durchführung des achsseitigen Endes des ersten Bauteils (71) sowie zwei äußere Öffnungen (76a) aufweist, wobei
(b) in die äußeren Öffnungen (76a) jeweils ein Befestigungselement (77a, 77b) eingebracht ist, das sich zur achsseitigen Anbindung in Vertikalrichtung nach unten erstreckt.

15. Lenker (30; 40; 50) nach einem der Ansprüche 1 bis 4, **dadurch gekennzeichnet, dass** das erste Bauteil ein Dreieckslenker (31; 41; 51) ist und das zweite Bauteil als eine Blattfeder (32; 42; 52) ausgeführt ist.

16. Lenker (30; 40; 50) nach Anspruch 15, **dadurch gekennzeichnet,**
(a) **dass** ein erster Endbereich (34; 44; 54) der Blattfeder (32; 42; 52) eine rahmenseitige Lageraufnahme (1) des Dreieckslenkers (31; 41; 51) formschlüssig umgreift; und/oder
(b) **dass** die Blattfeder an einer mittleren Stelle (35; 45; 55) mittels eines Halters (38; 48; 58) am Dreieckslenker (31; 41; 51) fixiert ist, derart, dass zumindest eine Vertikalbewegung der Blattfeder (32; 42; 52) relativ zum Dreieckslenker (31; 41; 51) verhindert wird.

17. Lenker nach Anspruch 16, **dadurch gekennzeichnet, dass** der Halter als Bridenverschraubung (38; 48), Halteklammer oder Haltebügel (58) ausgeführt ist.

18. Lenker nach einem der Ansprüche 15 bis 17, **dadurch gekennzeichnet,**
(a) **dass** die Blattfeder (32) an einem zweiten Endbereich (37; 47) einen weiteren Halter (36; 46) zur starren, drehfesten Befestigung des zweiten Endbereichs an der Achse aufweist; oder
(b) **dass** der zweite Endbereich (57) nach unten gekrümmt ist und dadurch ein freies Ende aufweist, das tiefer als die achsseitige Lagerstelle des ersten Bauteils (51) angeordnet ist.

19. Lenker (10; 20; 30; 40; 50; 60; 70) nach einem der vorhergehenden Ansprüche, **dadurch gekennzeichnet,**
(a) **dass** das erste Bauteil und das zweites Bauteil jeweils einteilig oder mehrteilig ausgeführt sein können; und/oder
(b) **dass** das erste Bauteil und das zweites Bauteil aus einem metallischen Werkstoff oder einem nichtmetallischen Verbundwerkstoff, z. B. karbonfaserverstärktem Kunststoff; sein können und/oder
(c) **dass** das erste Bauteil ein Dreieckslenker ist, der als Hohlbauteil oder Massivbauteil ausgeführt ist.

20. Verfahren zur Herstellung eines Lenkers (10; 20; 30; 40; 50; 60; 70) zur Anbindung einer Fahrzeugachse an einem Fahrzeugrahmen eines Kraftfahrzeugs und zur Längsführung, Querführung und Rollstabilisierung, aufweisend ein erstes Bauteil und ein mit dem ersten Bauteil lösbar oder nicht lösbar verbundenes zweites Bauteil, wobei das erste Bauteil im Wesentlichen die Längs- und Querführungseigenschaft des Lenkers festlegt und das zweite Bauteil im Wesentlichen die Rollstabilisierungseigenschaft des Lenkers festlegt, aufweisend die Schritte:
(a) Bereitstellen des ersten Bauteils;
(b) Bestimmen einer gewünschten Rollstabilisierungseigenschaft des Lenkers;
(c) Auswahl eines zweiten Bauteils aus einer Mehrzahl von bereitgestellten zweiten Bauteilen mit unterschiedlichen Stabilisierungseigenschaften oder Auslegen des zweiten Bauteils derart, dass der Lenker, aufweisend das erste Bauteil und das zweite Bauteil, die gewünschte Rollstabilisierungseigenschaft aufweist; und
(d) Verbinden des ersten Bauteils mit dem zweiten Bauteil.

21. Kraftfahrzeug, vorzugsweise Nutzfahrzeug, mit einem Lenker (10; 20; 30; 40; 50; 60; 70) nach einem der Ansprüche 1 bis 19.
